# EUROPÄISCHE PATENTANMELDUNG

(11) **EP 4 007 314 A1**
(43) Veröffentlichungstag der Anmeldung: **01.06.2022**
(21) Anmeldenummer: 22152657.7
(22) Anmeldetag: 31.08.2018
(51) Int. Cl.: H04W 4/02, H04W 4/30, G06F 16/583, H04W 4/35, G06F 3/01

(54) **VERFAHREN UND VORRICHTUNG ZUR BESTIMMUNG VON OBJEKTEN IN EINEM BILD**

(30) Priorität: 16.11.2017 DE 102017127004
(62) Teilanmeldung aus: 18762829.2
(71) Anmelder: Inpixon, Palo Alto, CA 94303 (US)
(72) Erfinder: Bucko, Michal, 10967 Berlin (DE); Vahdat-Pajouh, Darius, 13357 Berlin (DE)
(74) Vertreter: Cohausz & Florack

(57) **Zusammenfassung**

Verfahren zur Bestimmung von Objekten 4 in einem von einem mobilen Gerät erfassten Bild 14 umfassend: Bestimmen einer Position 8 des mobilen Gerätes in einem Raum 2 unter Verwendung zumindest eines Innenraumpositionierungsverfahren, Erfassen eines Bildes 14 des Raumes 2 mit dem mobilen Gerät, Bestimmen von potentiellen Objekten 4 in dem Bild 14 abhängig von der bestimmten Position8 und Vergleichen des Bildes 14 mit Bildinformationen 16, 18, 20 der potentiellen Objekte 4 zur Bestimmung zumindest eines Objektes 4 aus den potentiellen Objekten 4 in dem Bild 14.

## Beschreibung

Der Gegenstand betrifft ein Verfahren zur Bestimmung von Objekten in einem Bild sowie ein mobiles Gerät eingerichtet zur Durchführung einer Objekterkennung als auch ein Applikationsprogramm zur Durchführung einer Objekterkennung.

Im Bereich des Handels, beispielsweise Einzel-/oder Großhandel, sind auf engsten Raum Unmengen an Produkten verfügbar. Möchte man Produktinformation mit Hilfe von Augmented-Reality anreichern, so ist es notwendig, die Objekte sicher zu erkennen. Dies ist teilweise schwierig, da bei einer Anordnung in einem Regal die Objekte oft teilweise verdeckt sind und somit eine sichere Erkennung nicht möglich ist.

Zur Erkennung von Objekten sind unterschiedlichste Verfahren bekannt. Insbesondere sind Verfahren bekannt, die an eine Auswahl von Objekten angelernt werden können. Solche "Deep Learning" Verfahren sind beispielsweise Tensorflow Object Detection, welche beispielsweise folgende Rechenmodelle nutzen:
Single Shot Multibox Detection (SSD),
SSD with Inception V2,
Region-based Fully Convolution Networks (F-RCN) with RESNET,
RCNN with RESNET,
RCNN with Inception RESNET

Solche Verfahren lassen sich verwenden, um Objekte in Bildern zu erkennen. Hierbei lassen sich beispielsweise Menschen, Tiere oder dergleichen sicher erkennen. Dies bedingt aber, dass in dem zu untersuchenden Bild nur eine begrenzte Anzahl an Objekten vorhanden ist und diese sich voneinander abgegrenzt sind. Auch bedingt dies, dass die voneinander zu unterscheidenden Objekte unterschiedliche Konturen haben.

All diese Bedingungen können dann nicht erfüllt werden, wenn die Auswahl der zu detektierenden Objekte nahezu unbegrenzt ist und die Objekte darüber hinaus noch sehr ähnlich zueinander sind. Insbesondere im Handel kommt es vor, dass mehr als tausend, insbesondere mehr aus hunderttausend verschiedenste Objekte voneinander unterschieden werden müssen. In einem Einzelhandelsgeschäft können über tausend verschiedene Objekte vorhanden sein, die voneinander unterschieden werden müssen.

Erschwerend kommt hinzu, dass bekannte Objekterkennungsverfahren das zu erkennende Objekt in dem Bild in der Regel in Gänze "sehen" müssen. Das bedingt, dass die zu erkennenden Objekte nicht durch andere Objekte verdeckt oder abgeschattet sind. Diese Voraussetzung ist beispielsweise im Handel nicht gegeben. In einem Regal stehen Produkte dicht beisammen und verdecken sogar teilweise einander.

Die bekannten Verfahren darauf anzulernen, diese große Menge an Produkten erkennen zu können, ist sehr aufwändig. Darüber hinaus bedingt die schiere Masse der zu erkennenden, unterschiedlichen Objekte lange Rechenzeiten bis zur sicheren Erkennung der Objekte.

Aus diesem Grunde lag dem Gegenstand die Aufgabe zugrunde, ein Verfahren und eine Vorrichtung zur Objekterkennung zur Verfügung zu stellen, welche in verkürzter Rechenzeit verlässlichere Ergebnisse liefern.

Diese Aufgabe wird durch ein Verfahren nach Anspruch 1, ein mobiles Gerät nach Anspruch 12, ein Applikationsprogramm nach Anspruch 13 sowie ein System nach Anspruch 14 gelöst.

Es ist erkannt worden, dass durch Verwendung von kontextbezogenen Informationen die Anzahl der Objekte, die potentiell zu erkennen sind, erheblich reduziert werden kann. Dieser Erkenntnis liegt die Tatsache zugrunde, dass in manchen Umgebungen die Objektanordnung statisch ist. Insbesondere kann die Position von Objekten statisch sein. Bisherige Erkennungsverfahren nutzen diese Informationen nicht. Gegenständlich wird nunmehr vorgeschlagen, genau diese Information in das Verfahren zu Objektbestimmung mit einzubeziehen.

Zur Bestimmung des Kontextes, in welchem die Bestimmung der Objekte erfolgen soll, wird vorgeschlagen, zunächst eine Position des mobilen Gerätes in einem Raum unter Verwendung von zumindest eines Innenraumpositionierungsverfahrens zu bestimmen.

Ein Innenraumpositionierungsverfahren verwendet beispielsweise Funkfrequenzen, Radiofrequenzen, Magnetfelder, akustische Impulse oder dergleichen. Solche Innenraumpositionierungsverfahren sind hinlänglich bekannt. Zu den gängigsten Innenraumpositionierungsverfahren gehören Radiofrequenzpositionierungsverfahren, Magnetfeldpositionierungsverfahren und/oder Akustikpositionierungsverfahren. Bei den Radiofrequenzpositionierungsverfahren sind insbesondere Verfahren unter Verwendung von WLAN oder Bluetooth zu nennen. Diese Verfahren verwenden Informationen zu Feldstärken der Radiosender, wie beispielsweise WLAN oder Bluetooth-Sendern. Darüber hinaus kann mittels Triangulation und in Kenntnis der Position der entsprechenden Sender eine Position bestimmt werden.

Die Position des mobilen Gerätes in dem Raum bestimmt nun den Kontext in dem die Objekterkennung durchgeführt werden kann.

Die zu erkennenden Objekte sind in einem Bild erfasst, welches durch das mobile Gerät erfasst wurde. Ein Bild des mobilen Gerätes kann mit einer Kamera des mobilen Gerätes erfasst werden. Insbesondere eine Frontkamera eines mobilen Gerätes, beispielsweise eines Smartphones, eignet sich dazu, die Umgebung zu erfassen. Das Bild kann ein einzelnes Bild, eine Reihe von Bildern oder ein Bewegtbild sein.

Wie bereits erläutert, bestimmt die Position den Kontext der Objekterkennung. Aus diesem Grunde werden abhängig von der Position potentielle Objekte bestimmt. Das bedeutet, dass erkannt wurde, dass an bestimmten Positionen nur bestimmte Objekte potentiell vorhanden sind. Aufgrund der Tatsache, dass die Position von Objekten in bestimmten Anwendungsgebieten statisch ist, lässt sich mit Hilfe des Kontextes bestimmen, welche Objekte überhaupt in Frage kommen, in einem Bild vorhanden zu sein. Dies sind die potentiellen Objekte.

Anschließend erfolgt der Vergleich des Bildes mit Bildinformationen der potentiellen Objekte zur Bestimmung zumindest eines Objektes aus den potentiellen Objekten. Mit Hilfe von maschinellen Lernverfahren können Objekte in einem Bild sicher erkannt werden. Wenn die Auswahl der möglichen Objekte, die erkannt werden können, begrenzt ist, ist die Rechenzeit solcher Erkennungsverfahren begrenzt und die Treffergenauigkeit erhöht. Dies wird dadurch erreicht, dass nur potentielle Objekte erkannt werden können. Dies führt zu einem verringerten Satz an Auswahlmöglichkeiten für das Erkennungsverfahren. In diesem kleinen Satz an möglichen Objekten können bekannte Erkennungsverfahren mit einer hohen Trefferwahrscheinlichkeit die richtigen Objekte in einem Bild erkennen.

Zur Bestimmung der potentiellen Objekte kann deren Positionsinformation relevant sein. Aus diesem Grunde wird vorgeschlagen, dass Objekten jeweils Positionsinformationen zugeordnet werden. Jedem einzelnen Objekt kann eine Position zugeordnet werden. Anschließend kann ein Vergleich der Positionsinformationen der Objekte mit der bestimmten Position des mobilen Gerätes erfolgen. Abhängig von diesem Vergleich ist es möglich, die potentiellen Objekte zu bestimmen.

Um die Erkennung von Objekten zu verbessern, können den Objekten Bildinformationen zugeordnet werden. Das Objekterkennungsverfahren verwendet dann diese Bildinformationen und vergleicht diese mit Informationen aus dem Bild des mobilen Gerätes und versucht so in dem Bild ein entsprechendes Objekt zu erkennen. Die Bildinformationen sind bevorzugt Bilder der Objekte, wobei für ein Objekt bevorzugt zumindest zwei verschiedene Bilder vorhanden sein können. Die Bilder sind insbesondere hochauflösende Bilder.

Auch ist es vorteilhaft, wenn zumindest zwei voneinander verschiedene Ansichten des Objektes als Bilder vorhanden sind. Insbesondere kann ein Objekt in allen sechs Ansichten sowie in zumindest einer perspektivischen Ansicht erfasst worden sein und dieser Satz von zumindest sieben Bildern stellt die Bildinformation des Objektes dar. Auch können diese Bildinformationen in unterschiedlichen Beleuchtungssituationen erfasst werden, um so den Satz der Bildinformationen zu ergänzen. Darüber hinaus können verschiedene perspektivische Ansichten aus unterschiedlichen Perspektiven der Objekte die Bildinformationen anreichern.

Ein Satz von Bildern, welcher die Bildinformationen darstellt, ermöglicht eine genaue Erkennung der Objekte in dem Bild. Je größer die Anzahl an Referenzinformationen ist, desto besser kann ein maschinelles Lernprogramm eine Objekterkennung durchführen.

Um den Satz an potentiellen Objekten zu begrenzen, wird vorgeschlagen, dass ein Abstand zwischen der bestimmten Position des mobilen Gerätes und der Positionsinformation eines Objektes bestimmt wird und dass bei einem Unterschreiten einer unteren Grenze des Abstandes ein Objekt als potentielles Objekt gekennzeichnet wird. In einem von dem mobilen Gerät erfassten Bild können nur solche Objekte vorhanden sein, welche sich in einer relativen Nähe zu dem mobilen Gerät befinden. Diese relative Nähe kann als untere Grenze des Abstandes angenommen werden und beispielsweise zwei, fünf oder zehn Meter betragen und die untere Grenze bewegt sich insbesondere zwischen 50 cm und 20 m.

Die Positionsinformationen eines Objektes können Positionskoordinaten sein. Die bestimmte Position des mobilen Gerätes kann ebenfalls Positionskoordinaten beinhalten. Durch Vergleich der Positionskoordinaten von Objekten und des mobilen Gerätes lässt sich der Abstand zwischen der Position des Gerätes und der Position eines Objektes bestimmen. Alle Objekte, die innerhalb einer unteren Grenze zu dem mobilen Gerät positioniert sind, können als potentielle Objekte gekennzeichnet werden.

Zusammen mit dem Bild kann eine Ausrichtungsinformation des mobilen Gerätes erfasst werden. Abhängig von der Ausrichtungsinformation können die potentiellen Objekte bestimmt werden. Eine Kamera eines mobilen Gerätes hat einen bestimmten Blickwinkel, welcher durch die Ausrichtungsinformation bestimmt werden kann. Nur in diesem Blickwinkel können die potentiellen Objekte liegen. D.h., dass nicht nur der reine Abstand des Objektes zu dem mobilen Gerät relevant ist, sondern auch in welchem Sektor um das mobile Gerät herum ein Objekt ist. Der jeweilige Sektor wird durch die Ausrichtungsinformation bestimmt.

Eine Ausrichtungsinformation kann beispielsweise durch ein Kompass und/oder ein Gyroskop erfasst werden. Dabei können insbesondere einerseits die Ausrichtung und andererseits die Neigung des mobilen Gerätes bestimmt werden. Dadurch ist es möglich, beispielsweise die Richtung der optischen Achse der Bildaufnahmeeinrichtung des mobilen Gerätes zu bestimmen. Eine Bildaufnahmeeinrichtung des mobilen Gerätes kann eine Kamera, insbesondere eine Fotokamera und/oder eine Filmkamera sein bzw. ein Fotosensor mit Optik.

Die optische Achse weist in eine Richtung, die durch die Ausrichtung als auch die Lage des mobilen Gerätes bestimmt ist. Anhand dieser Information, insbesondere anhand der Kenntnis des Richtungsvektors, welcher die optische Achse der Bilderfassungseinrichtung beschreibt, kann ein Sektor bestimmt werden, in welchem potentiellen Objekte liegen.

Der Sektor kann als Blickfeld / Blickwinkel beschrieben sein. Der Sektor kann durch äußere Grenzen umschrieben werden, welche mit Hilfe von Positionsdaten beschrieben werden können. Nur Objekte, die innerhalb des Sektors liegen, kommen als potentielle Objekte in Frage. Es wird vorgeschlagen, dass abhängig von der Ausrichtungsinformation und der Position ein Blickfeld des mobilen Gerätes bestimmt wird. Dieses Blickfeld kann als der Sektor bezeichnet werden, in dem die potentiellen Objekte liegen. Auch wird vorgeschlagen, dass die potentiellen Objekte abhängig von dem Blickfeld und ihrer jeweiligen Positionsinformation bestimmt werden. Hierbei ist es möglich, die Positionskoordinaten der Positionsinformation zu verwenden, um diese mit den Positionskoordinaten des Sektors zu vergleichen. Führt der Vergleich dazu, dass ein Objekt in dem Sektor liegt, kann das Objekt als potentielles Objekt gekennzeichnet werden. Durch den Vergleich ist es möglich, nur die Objekte zu bestimmen, die überhaupt in dem Bild erscheinen können. Der Sektor kann ein Kegel sein, der den Raum beschreibt, von welchem ein Bild überhaupt gemacht werden kann.

Für die Objekterkennung kann es sinnvoll sein, in dem erfassten Bild Flächen und Kanten zu bestimmen. Hierdurch ist es möglich, Objektgrenzen zu bestimmen. Anhand der Objektgrenzen und der Bildinformationen innerhalb der Grenzen kann ein Vergleich mit dem Bildinformationen der einzelnen potentiellen Objekte erfolgen.

Gemäß einem Ausführungsbeispiel wird vorgeschlagen, dass ein Abstand zwischen dem mobilen Gerät und zumindest einem der potentiellen Objekte anhand des Bildes unter Verwendung von Bewegungsinformationen des mobilen Gerätes bestimmt wird. Bewegungsinformationen des mobilen Gerätes können mittels eines Inertialsensors, beispielsweise eines Accelerometers bestimmt werden. So ist es beispielsweise möglich, einzelne Pixel in einem Bewegtbild zu verfolgen und die Pixelgeschwindigkeit in dem Bild zu bestimmen. Hierdurch kann durch Abgleich mit der Geschwindigkeit der Bewegung des mobilen Gerätes ein Abstand zu den durch zumindest einen Pixel repräsentierten Objekt bestimmt werden. Der Abstand zwischen dem mobilen Gerät bzw. der Kamera des mobilen Gerätes und den jeweiligen Objekten kann relevant sein, um Größeninformationen abzuleiten. Die vorhandenen Bildinformationen können abhängig von dem ermittelten Abstand skaliert werden. Hierdurch kann die Objekterkennung optimiert werden.

Die Objekterkennung kann insbesondere mit Hilfe von Convolutional Neural Networks erfolgen.

Farbinformationen, insbesondere Farbverteilungen, Farbhäufigkeiten und Farbverläufe der Objekte können verwendet werden, um die Objekte in dem Bild zu bestimmen. Ein Objekt kann insbesondere auch Textinformationen enthalten. Auch kann durch eine Auswertung von erfassten Textinformationen in dem Bild auf das Objekt geschlossen werden.

Ein weiterer, unabhängiger Aspekt, welcher mit allen hier beschriebenen Merkmalen und Ansprüchen kombinierbar ist, ist ein Verfahren zur Positionsbestimmung in einem Raum, umfassend Ausmessen eines Raumes mittels eines aktiven Funktransponders, Identifizieren von Objekten in dem Raum, Erfassen der aktuellen Position des Objektes mit Hilfe des Funktransponders zusammen mit dem Objekt und Übermitteln der aktuellen Position zusammen mit einer Objektkennung an eine Zentrale. Zum Ausmessen des Raumes kann ein Funktransponder verwendet werden. Dieser kann beispielsweise mittels RFID-Technologie eine Position besonders genau, insbesondere mit einer Genauigkeit von +/- 2 cm bestimmen. Dann kann für ein Objekt in dem Raum zunächst dieses identifiziert werden und anschließend das Objekt mit der aktuellen Position verknüpft werden. Dies kann für viele oder alle Objekte in einem Raum geschehen, so dass für jedes erfasste Objekt eine exakte Position mit einer Abweichung von wenigen Zentimetern bekannt ist. Diese Information kann an eine Zentrale übermittelt werden.

Die Information zu der Position in dem Raum zusammen mit der Information zu dem Objekt ermöglicht es, potentielle Objekte zu bestimmen. Zu jedem Objekt existieren bevorzugt Bilder aus verschiedenen Blickwinkeln. Unter Verwendung dieser Bilder können die Objekte anschließend erkannt werden.

Ein Objekt kann unterschiedlich identifiziert werden, beispielsweise unter Verwendung eines Barcodes, eine QR-Codes, eines RFID-Codes oder eines anderen gängigen Codes.

Wie bereits erläutert, kann von Objekten eine Mehrzahl an Ansichten fotographisch abgebildet sein. Unter Verwendung dieser Bilder der Objekte lassen sich die Objekte sicher erkenne.

Wenn Objekte erkannt wurden, können Zusatzinformationen zu den Objekten ermittelt werden. Auch ist es möglich, das Bild auf einem Display des mobilen Gerätes anzuzeigen und in diesem Bild diese Zusatzinformationen einzublenden. Solche virtuellen Informationen ermöglichen eine sogenannte Augmented-Reality. Abhängig von den bestimmten Objekten, kann zumindest ein virtueller Gegenstand oder eine virtuelle Information in dem Display eingeblendet werden und exakt einem Objekt zugeordnet werden. Somit kann beispielsweise für bestimmte Objekte eine Preisangabe, eine Inhaltsstoffangabe, eine Werbung oder dergleichen virtuelle in dem Display angezeigt werden.

Weitere Aspekte sind ein mobiles Gerät nach Anspruch 12, ein Applikationsprogramm nach Anspruch 13 sowie ein System nach Anspruch 14.

Nachfolgend wird der Gegenstand anhand einer Ausführungsbeispiele zeigenden Zeichnung näher erläutert. In der Zeichnung zeigen:
- Fig. 1a: eine schematische Ansicht eines Ladenlokals von oben;
- Fig. 1b: eine schematische Ansicht eines Regals in einem Einzelhandelsgeschäft;
- Fig. 2a-g: verschiedene Ansichten eines Objektes;
- Fig. 3a: eine Darstellung eines mobilen Gerätes in einem Ladengeschäft;
- Fig. 3b: die Ansicht gemäß Fig. 3a mit einer zusätzlichen Ansicht der Blickrichtung des mobilen Gerätes;
- Fig. 4: einen schematischen Vergleich zwischen einem Bild und Abbildungen von Objekten;
- Fig. 5: eine schematische Ansicht einer Augmented-Reality.

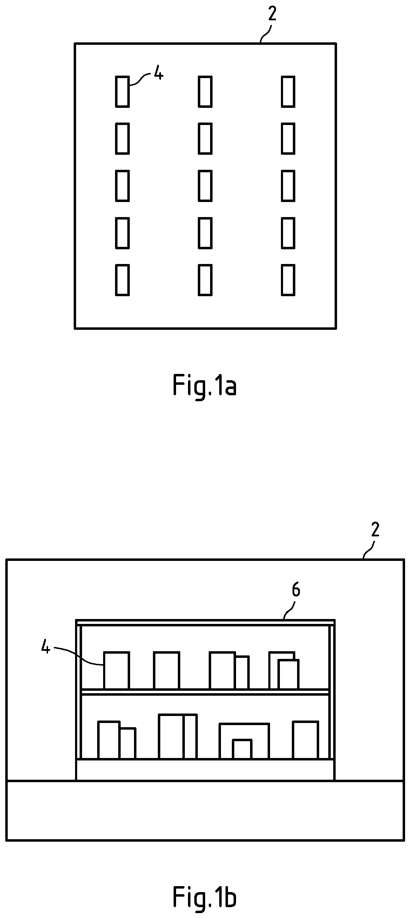

Fig. 1a zeigt einen Raum 2 von oben. In dem Raum 2 kann eine Vielzahl von Produkten 4 angeordnet sein. Ein Produkt 4 wird nachfolgend repräsentativ für ein Objekt betrachtet. In dem Raum 2 können die Produkte 4 an jeweils einem fest definierten Ort platziert sein. D.h., dass zu jedem Produkt 4 zumindest eine Ortsinformation vorhanden ist. Die Ortsinformation kann insbesondere zumindest zweidimensionale Koordinaten in dem Raum 2 beinhalten. Es ist jedoch darüber hinaus auch möglich, Ortsinformationen in einer dritten Information, beispielsweise senkrecht zur Zeichenebene für jedes einzelne Produkt 4 abzuspeichern. Die Ortsinformationen sind insbesondere statisch. Wenn ein Produkt 4 an einem anderen Ort platziert wird, kann die Ortsinformation dazu verändert werden. Dies geschieht aber in der Regel selten.

Selbst wenn die nachfolgende Beschreibung lediglich für eine zweidimensionale Ortsinformation erfolgt, so gilt das Gesagte natürlich auch für eine dreidimensionale Ortsinformation.

In einer zentralen Datenbank können beispielsweise zu jedem Produkt 4 eine Produktkennung sowie eine Ortsinformation hinterlegt sein. Die Ortsinformation entspricht dem Ort des Produktes 4 in dem Raum 2.

Wie eingangs bereits erläutert, ist die Identifikation von Produkten 4 in einem Bild an sich bekannt. Bei einer großen Anzahl an verschiedenartigen Produkten 4 können herkömmliche Verfahren jedoch lange Rechenzeiten für die Erkennung benötigen. Dies gilt insbesondere dann, wenn die Produkte 4 nicht vollständig sichtbar sind, wie des in der Fig. 1b angedeutet ist.

Fig. 1b zeigt ein Regal 6 in dem Raum 2. In dem Regal 6 sind die Produkte 4 nebeneinander und übereinander angeordnet. Wie der Fig. 1b zu entnehmen ist, ist nicht jedes Produkt 4 vollständig sichtbar. Es kommt durchaus vor, dass Produkte 4 sich einander gegenseitig verdecken und nur Teile der Produkte 4 sichtbar sind. Diese gegenseitige "Abschattung" stellt herkömmliche Erkennungsverfahren vor enorme Probleme. Durch nur unzureichende Bildinformationen zu einzelnen Produkten 4 kann eine Produkterkennung gegebenenfalls mit herkömmlichen Methoden nicht zielführend sein. Aus diesem Grunde wird vorgeschlagen, die Ortsinformation von den Produkten 4 bei der Produkterkennung zu verwenden.

Darüber hinaus ist es beispielsweise möglich, neben der Ortsinformation und der Produktkennung einen Satz an Produktbildern in einer zentralen Datenbank vorzuhalten und diese Bilder für die Produkterkennung zu verwenden.

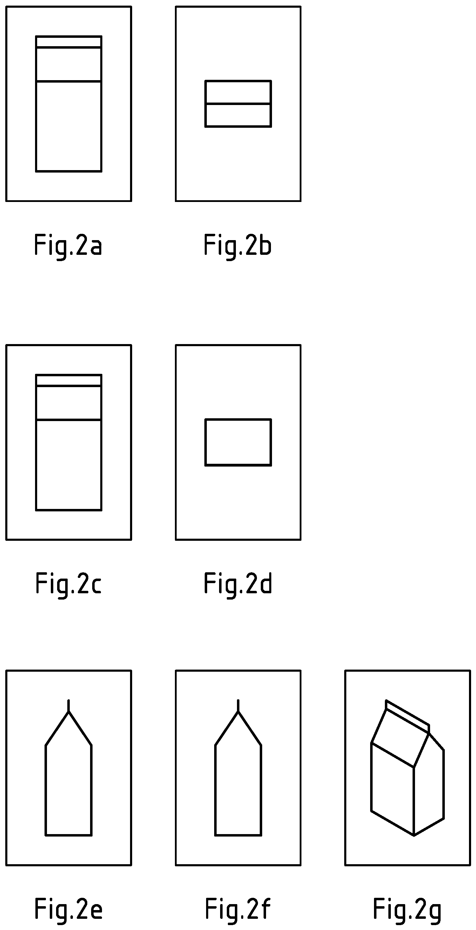

Ein Satz von Bildern eines einzelnen Produkts 4 ist in den Fig. 2a-g dargestellt. Bevorzugt ist, wenn zumindest zwei, insbesondere zumindest sieben verschiedene Ansichten eines jeden Produktes 4 in insbesondere einer hochauflösenden Form in der zentralen Datenbank vorhanden sind. Diese Abbildungen des Produktes 4 können dem Produkt 4 zugeordnet in der Datenbank gespeichert sein. Fig. 2a zeigt eine Vorderansicht, Fig. 2b zeigt eine Draufsicht, Fig. 2c zeigt eine Hinteransicht, Fig. 2d zeigt eine Unteransicht, Fig. 2e und f zeigen Seitenansichten und Fig. 2g zeigt eine perspektivische Ansicht.

Der Satz der Abbildungen 2a-g kann in der Datenbank mit einem einzelnen Produkt 4 verlinkt sein. So kann in der Datenbank ein Zeiger auf den Satz Ansichten 2a-g gespeichert sein. Hierüber ist ein Zugriff auf diese Produktdaten möglich.

Wenn nun ein Regal 6, wie in der Fig. 1b gezeigt ist, von einer Kamera eines mobilen Gerätes erfasst wird, sollten die Produkte 4 in dem Regal 6 sicher erkannt werden. Das mobile Gerät ist in der Regel mit einer Bilderfassungseinrichtung, insbesondere einer Kamera bzw. einem Fotosensor und einer Optik ausgestattet. Die Kamera kann dabei einer Fotokamera oder eine Filmkamera sein. Insbesondere ist gegenständlich die Frontkamera des mobilen Gerätes, beispielsweise eines Telefons, insbesondere eines Smartphones als auch eines Tablet Computers geeignet. Ein Nutzer kann sich mit dem mobilen Gerät in dem Raum 2 bewegen und mit der Kamera Bilder, beispielsweise des Regals 4 erfassen. Möchte man dieses Bild nun mit Zusatzinformationen im Sinne einer Augmented-Reality anreichern, so ist eine schnelle und zuverlässige Produkterkennung notwendig.

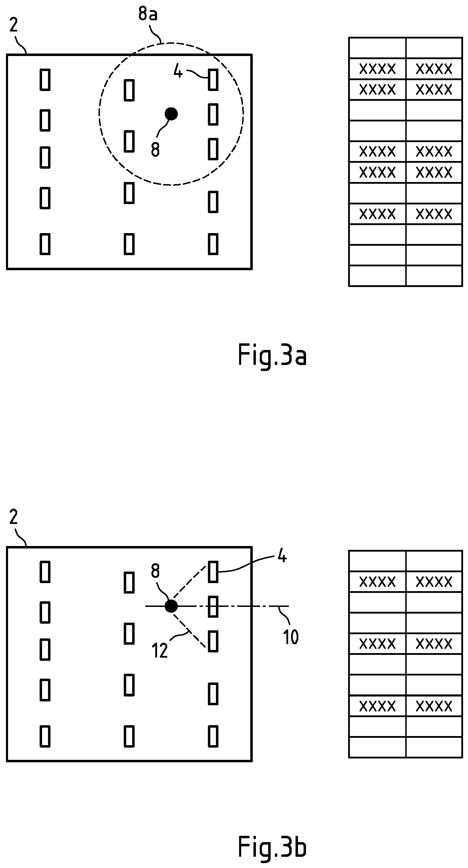

Aus diesem Grunde wird nunmehr vorgeschlagen, dass Positionsinformationen 8 des mobilen Geräts im Raum 2 erfasst werden. Dies ist beispielhaft in der Fig. 3a dargestellt.

Fig. 3a zeigt ein mobiles Gerät, dessen Position 8 erfasst wird. Die Positionserfassung ist mit einer gewissen Unschärfe verknüpft, so dass sich das mobile Gerät tatsächlich im Umkreis 8a um die erfasste Position 8 befindet. Die genaue Position ist dabei jedoch nicht von näherer Relevanz. Je höher die Positionsauflösung desto besser.

In dem Umkreis 8a zu der bestimmten Position 8 ist eine begrenzte Anzahl an Produkten 4 angeordnet.

Es ist möglich, ausgehend von der Position 8 alle Produkte 4 zu identifizieren, die in einem Abstand unter einer unteren Grenze hiervon beabstandet sind. Dies ist beispielsweise dadurch möglich, dass unter Verwendung der Positionsinformation der Produkte 4 und der Positionsinformation 8 der Abstand eines jeden Produktes 4 von der Position 8 ermittelt wird. Ist der Abstand kleiner als ein Grenzwert, so wird angenommen, dass das Produkt 4 in der Nähe der Position 8 ist. Alle solche Produkte können dann in einer entsprechenden Datenbank, die auf der rechten Seite der Fig. 3a dargestellt ist, gekennzeichnet werden.

Auf der rechten Seite der Fig. 3a ist eine Liste dargestellt, in der alle Produkte 4 mit zumindest ihrer Produktkennung und ihrer Ortsinformation hinterlegt sind. Darüber hinaus können die Bildinformationen gemäß der Fig. 2a-g für jedes einzelne der Produkte 4 hinterlegt sein. Nach dem Vergleich der Position 8 mit den Positionsinformationen der Produkte 4 sind in dem gezeigten Beispiel fünf Produkte im Umkreis 8a und könne potentiell von dem mobilen Gerät erfasst werden.

Ausgehend hiervon kann eine Objekterkennung bereits durchgeführt werden, es kann jedoch darüber hinaus ermittelt werden, welches Blickfeld das mobile Gerät hat. Dies ist in der Fig. 3b dargestellt. Das dort gezeigte Bestimmen des Blickfeldes optional.

Fig. 3b zeigt erneut die Position 8 des mobilen Gerätes in dem Raum 2. Neben der Position 8 kann beispielsweise unter Verwendung eines Kompasses und/oder eines Neigungssensors des mobilen Gerätes eine optische Achse 10 ermittelt werden. Die optische Achse 10 definiert das Blickfeld 12 der Kamera des mobilen Gerätes. Nur im Blickfeld 12 angeordnete Produkte 4 können durch die Kamera erfasst werden.

Unter Verwendung der Position 8 wird zunächst, wie in der Fig. 3a gezeigt, ein Satz an potentiellen Produkten 4 identifiziert. Alternativ oder unter zusätzlicher Verwendung der Information zur optischen Achse 10 können aus diesem Satz weitere Produkte 4 als potentielle Produkte 4 ausgeschlossen bzw. eingeschlossen werden, was auf der rechten Seite der Fig. 3b gezeigt ist. Aus den zuvor fünf potentiellen Produkten 4 können nur noch insgesamt drei in Frage kommen, die von dem mobilen Gerät erfasst werden können. Zu diesen drei Produkten 4 liegen entsprechende Bildinformationen gemäß den Fig. 2a-g vor und diese Informationen können in dem anschließenden Produkterkennungsschritt verwendet werden.

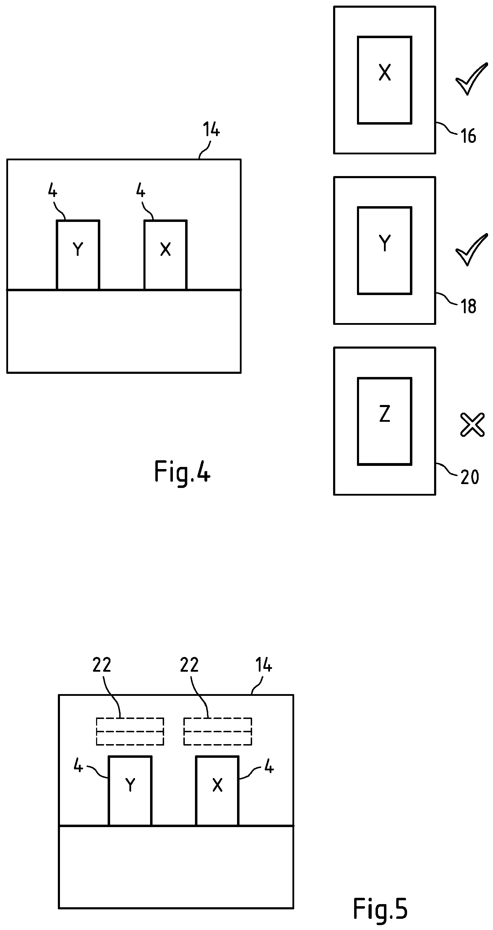

Fig. 4 zeigt ein Bild 14, welches mit einer Kamera eines mobilen Gerätes beispielsweise von einem Regal 6 gemacht wurde. In dem Bild 14 ist zu erkennen, dass die Produkte 4 (X, Y) erfasst wurden. Zunächst wird die Position 8 gemäß der Fig. 3a bestimmt. Anschließend wird die optische Achse 10 und somit das Blickfeld 12 der Kamera gemäß Fig. 3b bestimmt. Ausgehend hiervon sind drei Produkte 4 (X, Y, Z) identifiziert worden, die potentiell in dem Bild 14 erscheinen können.

Anschließend wird für diese drei Produkte 4 die Bildinformation 16, 18, 20 gemäß der Fig. 2a-g ermittelt.

In dem Bild 14 kann beispielsweise durch eine Kantenerkennung ein jedes der Produkte 4 voneinander unterschieden werden. Anschließend wird für jedes der Produkte 4 (X, Y) ein Vergleich mit den Bildinformationen 16, 18, 20 durchgeführt. Hierbei können bekannte Erkennungsverfahren, beispielsweise unter Verwendung von Convolutional Neuronal Networks zum Einsatz kommen.

Fig. 4 zeigt, dass aus den potentiellen Produkten 4 (X, Y, Z) die Produkte 4 (X, Y) anhand der Bilder 16, 18 in dem Bild 14 identifiziert werden konnten, wohingegen das Produkt 4 (Z) in dem Bild 14 nicht vorhanden ist, was durch die Bildinformation 20 bestätigt werden kann.

Nachdem nun die Produkte 4 (X, Y) in dem Bild 14 sicher erkannt wurden, kann das Bild 14, wie in der Fig. 5 gezeigt, mit Zusatzinformationen 22 angereichert werden. Die Zusatzinformationen 22 können beispielsweise virtuell in das Bild 14 eingeblendete Produktinformationen beinhalten. Dies können Werbeinformationen, Inhaltsstoffe oder dergleichen zu den Produkten 4 sein.

Dem Benutzer wird auf dem Display des mobilen Gerätes das Bild 14 zusammen mit den Zusatzinformationen 22 angezeigt.

### Bezugszeichenliste

- 2: Raum
- 4: Produkt
- 6: Regal
- 8: Position
- 8a: Umkreis
- 10: optische Achse
- 12: Blickfeld
- 14: Bild
- 16-20: Bildinformationen
- 22: Virtuelle Informationen

## Patentansprüche

1. Verfahren zur Bestimmung von Objekten in einem von einem mobilen Gerät erfassten Bild umfassend:
- Bestimmen einer Position des mobilen Gerätes in einem Raum unter Verwendung zumindest eines Innenraumpositionierungsverfahren,
- Erfassen eines Bildes des Raumes mit dem mobilen Gerät,
- Bestimmen von potentiellen Objekten in dem Bild abhängig von der bestimmten Position,
- Vergleichen des Bildes mit Bildinformationen der potentiellen Objekte zur Bestimmung zumindest eines Objektes aus den potentiellen Objekten in dem Bild.

2. Verfahren nach Anspruch 1,
**dadurch gekennzeichnet,**
- **dass** Objekten Positionsinformationen zugeordnet werden und dass abhängig von einem Vergleich der Positionsinformationen mit der bestimmten Position die potentiellen Objekte bestimmt werden.

3. Verfahren nach einem der vorangehenden Ansprüche,
**dadurch gekennzeichnet,**
- **dass** den Objekten Bildinformationen zugeordnet sind, wobei zumindest zwei Bilder der Objekte die Bildinformationen bilden, wobei die Bilder insbesondere hochauflösende Bilder sind und/oder wobei die Bilder insbesondere zumindest zwei voneinander verschiedene Ansichten des Objektes betreffen.

4. Verfahren nach einem der vorangehenden Ansprüche,
**dadurch gekennzeichnet,**
- **dass** ein Abstand zwischen der bestimmten Position des mobilen Gerätes und der Positionsinformation eines Objektes bestimmt wird und dass bei einem unterschreiten einer unteren Grenze des Abstands ein Objekt als potentielles Objekt gekennzeichnet wird.

5. Verfahren nach einem der vorangehenden Ansprüche,
**dadurch gekennzeichnet,**
- **dass** zusammen mit der Bild eine Ausrichtungsinformation des mobilen Gerätes erfasst wird und abhängig von der Ausrichtungsinformation die potentiellen Objekte bestimmt werden.

6. Verfahren nach einem der vorangehenden Ansprüche,
**dadurch gekennzeichnet,**
- **dass** abhängig von der Ausrichtungsinformation und der Position ein Blickfeld des mobilen Gerätes bestimmt wird und dass die potentiellen Objekte abhängig von dem Blickfeld und ihrer jeweiligen Positionsinformation bestimmt werden.

7. Verfahren nach einem der vorangehenden Ansprüche,
**dadurch gekennzeichnet,**
- **dass** in dem erfassten Bild zumindest Kanten und/oder Flächen bestimmt werden.

8. Verfahren nach einem der vorangehenden Ansprüche,
**dadurch gekennzeichnet,**
- **dass** ein Abstand zwischen dem mobilen Gerät und zumindest einem der potentiellen Objekte anhand des Bildes unter Verwendung von Bewegungsinformationen des mobilen Gerätes bestimmt wird und insbesondere dass mit Hilfe des bestimmten Abstand die Bildinformationen von den potentiellen Objekten skaliert werden.

9. Verfahren nach einem der vorangehenden Ansprüche,
**dadurch gekennzeichnet,**
- **dass** beim Vergleichen des Bildes mit Bildinformationen der potentiellen Objekte die Objekte aus den potentiellen Objekten mit Hilfe eines Convolutional Neural Networks bestimmt werden.

10. Verfahren nach einem der vorangehenden Ansprüche,
**dadurch gekennzeichnet,**
- **dass** beim Vergleichen des Bildes mit Bildinformationen der potentiellen Objekte die Objekte aus den potentiellen Objekten mit Hilfe von Farbinformationen bestimmt werden.

11. Verfahren nach einem der vorangehenden Ansprüche,
**dadurch gekennzeichnet,**
- **dass** in einem erfassten Bild des mobilen Gerätes abhängig von dem erkannten Objekt zumindest ein virtueller Gegenstand eingeblendet wird und das so angereicherte Bild auf einem Bildschirm des mobilen Gerätes zur Anzeige gebracht wird.

12. Mobiles Gerät eingerichtet zur Bestimmung von Objekten in einem von einem mobilen Gerät erfassten Bild, insbesondere nach einem Verfahren nach einem der vorangehenden Ansprüche, umfassend:
- Positionsbestimmungsmittel eingerichtet zum Bestimmen einer Position des mobilen Gerätes in einem Raum unter Verwendung zumindest eines ersten Innenraumpositionierungssensors,
- Bilderfassungsmittel eingerichtet zum Erfassen einer Bildinformation,
- Rechenmittel eingerichtet zum Bestimmen von potentiellen Objekten in dem Bild abhängig von der bestimmten Position,
- Vergleichsmittel eingerichtet zum Vergleichen des Bildes mit Bildinformationen der potentiellen Objekte zur Bestimmung zumindest eines Objektes aus den potentiellen Objekten in dem Bild.

13. Applikationsprogramm zur Ausführung auf einem mobilen Gerät umfassend Programmcode, um einem Prozessor des mobilen Gerätes zur Durchführung eines Verfahrens nach einem der vorangehenden Ansprüche anzusteuern.

14. System eingerichtet zur Bestimmung von Objekten in einem von einem mobilen Gerät erfassten Bild, insbesondere nach einem Verfahren nach einem der vorangehenden Ansprüche, umfassend:
- Empfangsmittel eingerichtet zum Empfangen einer Position eines mobilen Gerätes in einem Raum und einem von dem mobilen Gerät erfassten Bild,
- Rechenmittel eingerichtet zum Bestimmen von potentiellen Objekten in dem Bild abhängig von der Position,
- Vergleichsmittel eingerichtet zum Vergleichen des Bildes mit Bildinformationen der potentiellen Objekte zur Bestimmung zumindest eines Objektes aus den potentiellen Objekten in dem Bild.
